Europäisches Patentamt

European Patent Office

Office européen des brevets

⑨

(11) Publication number: **0 289 093**

**A2**

(12) **EUROPEAN PATENT APPLICATION**

(21) Application number: 88200809.7

(22) Date of filing: 27.04.88

(51) Int. Cl.⁴ **F02M 21/04 , B01F 3/02 ,
//B01F5/00**

(30) Priority: 28.04.87 NL 8700996

(43) Date of publication of application:
**02.11.88 Bulletin 88/44**

(84) Designated Contracting States:
**AT DE GB IT**

(71) Applicant: **Hofmeester, Paul Martin
Emmalaan 21
NL-3051 JP Rotterdam(NL)**

(72) Inventor: **Hofmeester, Paul Martin
Emmalaan 21
NL-3051 JP Rotterdam(NL)**

(54) **Apparatus for the mixing of gas or gases with air in a controllable mixing ratio for a combustion engine.**

㊗ The invention refers to the mixing of gas or gases, with air, in a controllable ratio, by means of a mixing apparatus wherein the entrance air is forced in a complete developed rotation stream, by which a strong suction pressure is created in the centre, so that gas can be sucked in ratio independent of the total volume per second.

The mixing ratio of gas and air is controlled through an adjustable angle of the air entrance nozzles. The rotating airstream is accelerated in the radial entrance plane and via a logarithmic curved profile, the airstream is guided in the axial outlet direction of the mixing apparatus. The rotating airstream develops a centre-core stream, where inside it a maximal under-pressure is created. By this underpressure, the main gasstream can be sucked and mixed with the airstream via the whirl grates, which are fixed in the outletsection just in front of the mixture outlet valve.

Fig. 1.

BAD ORIGINAL

## APPARATUS for the mixing of gas or gases with air in a controllable ratio for a combustion-engine.

For stationary or traction combustion-engines, generally the combustiongas is supplied at about atmospheric pressure and mixed with air in a gas-air mixer. This is required because gas might stream outside through the mixer during starting or standstill, causing explosive danger.

Such gas-air mixtures are sucked directly after mixing to the combustion chambers of the engine. As a fuel, gaseous fuels or fluidic fuels are applied, such as to dual fuel engines. For the combustion process, the gas-air mixing ratio is of prime importance and is called stochiometric as just enough air is present for the complete combustion of the present gasvolume. (airexcess is zero).

Generally an airexcess or excess with reinjected exhaustgas is applied in order to reduce the undesired oxygen-nitrogen combinations in the exhaust gas. As a gaseous fuel, generally natural gas, propane or LPG is applied. The air-gas ratio, called lambda value, is one of the most important variables for the adjustment and/or control of the engine power, and the composition and temperature of the exhaust gases.

Generally the combustion in gasengines is performed with lambda value between 1,0 (rich mixture) and 1,6 (poor mixture), whereby a complete combustion of the mixture in the cylinder is possible.

For lean mixtures a higher compressionratio is admitted, without causing detonation, as compared to rich mixtures.

The sucking of gas-air mixtures according to the dutch patent 7605655 is affected by the vacuum pressure of the engine. The sucked air is accelerated in a venturi-tube with a centrecore, by which an underpressure is created for the sucking of the gas in the narrowest section of the annular venturi-tube. The gasvolume can be controlled by choking the gasinlet opening by means of a complicated system of membranes and springs, which are activated by the engine vacuum pressure. However, it appears that harmfull inhomogeneousness of the mixture remains due to high air speeds in the venturi and consequently short residence-times in the mixer and due to the one sided gassupply in the throat of the venturi.

The drawback of the mixture in-homogeneousness does not appear in our invention, due to the created strong circulation and whirl gratings.

Besides the gas-air ratio in our invention is direct and accurately controlled by changing the rate of circulation of the relatively large airstream in stead of the complicated gaschoking system.

According to the american patent 2,565,907 the sucking of a secondary stream could take place by the expansion in tangential direction of a primary stream.

At the same time, also a strong rotation is developed, which transports the secondary fluidum via an annular opening to the place of higher pressure than the suctionpressure of the secondary medium itself.

The drawback of this compressive action is that compressed air is required for the expansion process and to overcome the relatively high resistance in the annular opening.

Besides the nozzles are fixed and convergent for the expansion of the prime medium and also there is the danger of streaming of prime medium in the outlet of the secondary medium when insufficient discharge of the mixture occurs.

Those objections or limitations do not exist in our invention, because a complete circulation stream, as long as possible, is created without overpressures or restrictions in the direction of flow. The whirl grates in the outlet section take care for the completion of the mixing, and also in our invention, controllable airinlet nozzles are applied to control the mixing ratio.

Due to the lack of compressed air, the mixture stream can only be started through the sucking of the engine, so that no gas-air mixture can stream outside the mixer.

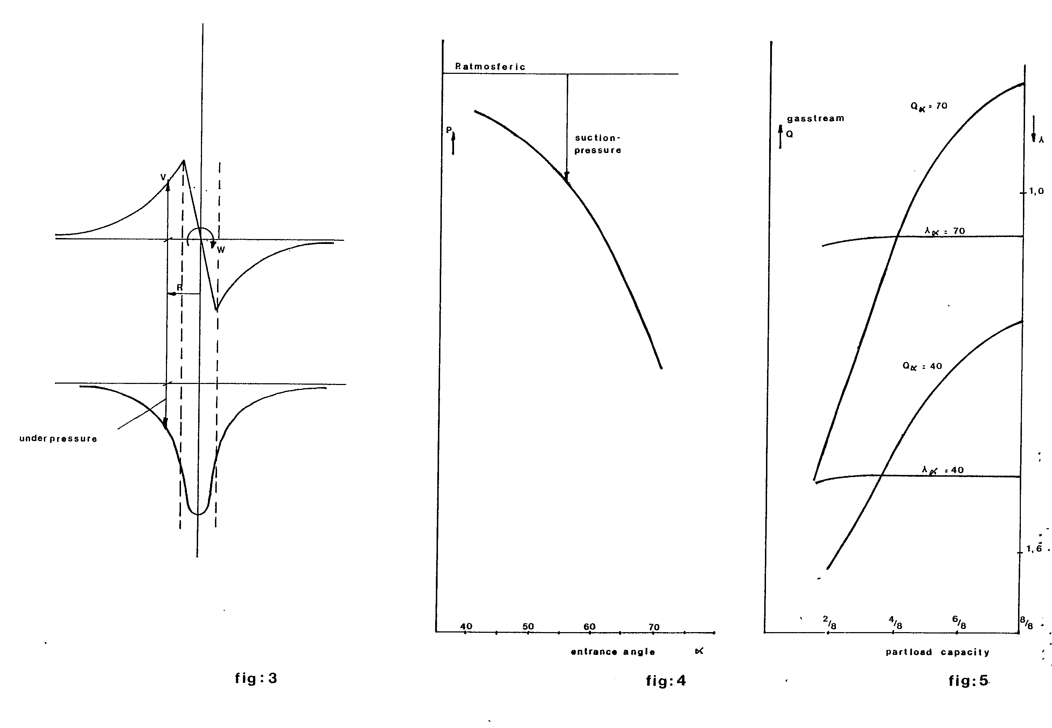

The principle of the mixing is based on the creation of underpressure in the mixer, by means of a forced developed rotation stream in the airflow. Bij means of this developed underpressure, gas can be sucked in the desired ratio to the airflow and independent of the magnitude of flow. The air circulates as a "rotation-free potential stream" around a centre core stream. The circulation velocity in a point of this "rotation-free" stream is inversed proportionate to the radius from the centre line (fig. 3).

By the deflection of the airstream from the inletsection into axial direction of the mixer, a centre core stream is created, wherein a "non-rotation free" circulation stream exist. Thereby, the circulation velocity is directly proportionate to the radius from the centre-line. Such a streaming situation does exist in natural cyclones. There the highest velocities are developed at the circumference of the centre core stream.

The kinetic energy of the centre core stream is small compared to the kinetic energy of the surrounding stream, or in other words, the behaviour of the centre core stream is determined by the surrounding stream around the centre core. Consequently the magnitude of the surrounding stream shall be larger than the centre core stream.

The centre core diameter is determined by the geometry of the mixer. The surrounding stream is initiated and controlled by adjustable nozzles in the entrance section of the mixer. An air molecule shall accelerate during its spiralwise route into the mixer and increase in kinetic energy.

From the mathematical description of the "potential" stream it can be learned that the developed underpressure is proportionate to the square of the anglespeed divided by the radius. Inside the centre core the underpressure drops further to a minimum, depending on the square of the anglespeed and the centre radius.

By this underpressure the gas is sucked. When the gaspressure is set equal to the airpressure by means of a zero-pressure regulator, then it is provable that the gas-air ratio only depends on the angle of the airinlet nozzles, based on fixed geometry of the mixer and the density of gas and air. When the underpressure in the mixer is considered as a parameter for the gas sucking capacity, then the relation between airnozzle angle and part load or full load of the engine can be shown.

In fig.4 the influence of airnozzle angle on the underpressure is shown.

In fig. 5 the relation between the engine-load and sucked gasflow respectively the lambda value is shown.

By means of one single adjusting ring, the position of the airnozzles is set, by which the state of air circulation is influenced. The circulation determines the generated underpressure in the centre core of the mixingapparatus, by which the sucked gasstream is determined. With that the gas-air ratio or lambda value is controllable in such way, that for each angle of the airnozzles one specific lambda can be obtained.

The advantage is that the lambda value can be controlled accurately by the angle of the airnozzles, without changing the airvolume. It is also possible to replace the airstream partly by fluegas, with the aim to replace the excess air partly or completely in order to reduce the NO-x formation.

The invention provides in a second gas inlet, where the fluegas can be sucked at small overpressure via an annular chamber with a pattern of openings positioned just behind the airnozzles. In this way the fluegas replaces a part of the airstream before the mixing with the combustion gas, while the total flow is not significantly changed. Both streams, the combustiongas and the fluegas stream, can be pre-adjusted by means of restrictions in the supply.

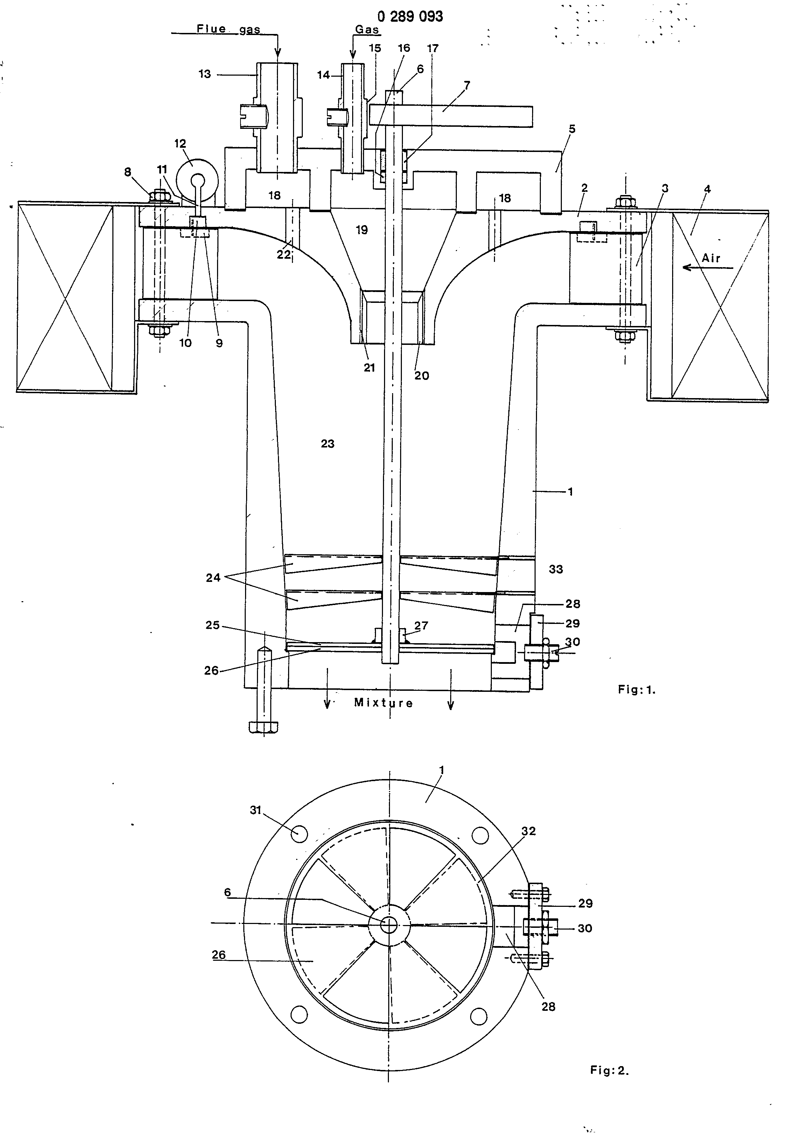

The mixer-apparatus is based on the above described mixing principle. The apparatus is an assembly of a three-part body (fig. 1): mixerhouse 1, the vortex flange 2 and the gasinlet flange 5.

The air is sucked via the airfilter 4 and is forced to circulate through a number of air-entry nozzles 3 equally positioned at the circumference of the airinlet section.

The angle of the nozzles 3 is adjustable around a special pivot-shaft 8. These pivot-shafts carry the vortex-flange at fixed interspace to the mixerhouse 1 in such way that the air nozzles 3 can be turned. The gasinlet flange 5 in mounted on the vortex-flange 2 in such way that a gaschamber 19 and a fluegas chamber 18 is obtained. The fluegas resp. combustion gas is supplied via restrictions 13 and 14 to the gaschambers 18 and 19. Via the openings 22 in the vortex flange resp. via the gasinlet nozzles 20, central positioned 21 in the vortex-flange, the flue gas resp. the combustion gas is sucked into the mixerhouse by the developed underpressure in the mixerroom 23.

The rotating air and gasstream is mixed to a homogeneous mixture by means of two or three whirl-grates 24, which are mounted in the mixerhouse with screws 33.

Those whirl-grates consist of a number of similar curved blades, connected by a central ring. The whirl-grates accelerate the rotation of the gas-air mixture between throttle valve 25,26 and the mixing chamber 23.

The homogeneous gas-air mixture is fed to the engine via the throttle valve 25, 26 in such way that the volume of the mixture stream is controlled by turning in line of the symmetric segment openings 26 of both valve-plates (fig. 2).

Turning in line of the segment openings with the shaft 6 and lever 7, implicates the fixation of valve plate 26 in the mixerhouse 1 and the mounting of valve plate 25 to the throttle valve shaft 6 with the cam 27.

The segment openings of the valve plates are such, that an as large as possible total-flow opening of the throttle valve has been obtained, but also able to cut off the flow completely. With closed throttle valve however idle running of the engine shall be possible. For that purpose a bypass channel 28 is made around the throttle valve. The flow for idle running is adjustable by means of the adjusting screw 30 in the cap 29.

The gas-air mixer is vertical or horizontal mounted with bolts at the bottomside of the house to the engine. Apart from the fixed angle adjustment of the air inletnozzles 3, the mixing ratio can also be controlled during operation by means of one single mechanism or steppositioner motor 12.

The adjusting mechanism consists of an adjustmentrod, connected to pin 11, which turns ring 10.

The ring 10 is laying in a circular groove in the vortex flange 2 and is connected with the airnozzles via a sliding-pin in a groove of each airnozzle.

By a turning length of a few centimeter for the ring 10, all the airnozzles can be adjusted between 40 and 70 degrees simultaneously.

## Claims

1. Apparatus for the formation of a homogeneous gas-air mixture, consisting of several gascomponents, with a controllable mixing ratio, independent of the total mixture volume, with the aim that the air component is forced in a controllable rotation or circulating stream by means of an adjustable entry-angle of air in the radial air-entrance, by which created underpressure dependent of the air circulation stream, the gascomponents are sucked in axial direction.

2. Apparatus according to claim 1, with the aim that the radial air entry between a curved flange and bottom flange transfers via a logarithmic curve into a conus-shaped mixerhouse, that is provided with whirl grates and throttle valve.

3. Apparatus according to claim 1 and 2, with the aim that all air guiding nozzles are interconnected by means of a pin and groove mechanism with a ring, positioned in a circular groove in said curved top-flange, which ring can be turned by an electric positioner motor such, that an airnozzle-angle adjustment can be obtained between 40 and 70 degrees.

4. Apparatus according to claim 1-3, with the aim that on the curved-flange a top-flange is mounted, such, that one or more buffer-rooms are formed for the supply of gas respectively the fluegases, which are fed through adjustable restrictions.

5. Apparatus according to one or more of the previous claims, with the aim that one or more whirling grates, provided with radial-wise positioned guidingblades, are mounted in the mixerhouse.

6. Apparatus according to one or more or the previous claims, with the aim that a throttle valve is mounted in the outlet of the mixerhouse, consisting of a turnable plate and thereunder a fixed blade, both provided with such segmentshaped openings, that in the complete open position of the valve a maximal 45% throughout area is obtained and in closed position 0%.

7. Apparatus according to one or more of the previous claims, with the aim that a bypass channel is made aside of the throttle valve provided with adjusting screw for the adjustment of minimal gas-air stream at closed position of the throttle valve.

8. Apparatus according to one or more of the previous claims, with the aim that means are provided for mounting of an airfilter, concentric around the said air entry section.

**0 289 093**

Fig:1.

Fig:2.

**fig : 3**

Ratmosferic

P

suction-pressure

under pressure

40    50    60    70

entrance angle    ∝

**fig : 4**

gasstream
Q

$Q_K = 70$

λ

1,0

$λ_∝ = 70$

$Q_∝ = 40$

$λ_∝ = 40$

1,6

$^2/_8$    $^4/_8$    $^6/_8$    $^8/_8$

partload capacity

**fig : 5**

0 289 093